# FASCICULE DE BREVET EUROPEEN

(11) **EP 2 726 570 B1**
(45) Date de publication et mention de la délivrance du brevet: **06.12.2017**
(21) Numéro de dépôt: 12728687.0
(22) Date de dépôt: 15.05.2012
(51) Int. Cl.: C09K 3/30, C09K 5/04, C08J 9/14, C11D 7/50

(54) **COMPOSITIONS DE 2,4,4,4-TETRAFLUOROBUT-1-ENE ET DE CIS-1,1,1,4,4,4-HEXAFLUOROBUT-2-ENE**
ZUSAMMENSETZUNGEN AUS 2,4,4,4-TETRAFLUORBUT-1-EN UND CIS-1,1,1,4,4,4-HEXAFLUORBUT-2-EN
COMPOSITIONS OF 2,4,4,4-TETRAFLUOROBUT-1-ENE AND CIS-1,1,1,4,4,4-HEXAFLUOROBUT-2-ENE

(30) Priorité: 01.07.2011 FR 1155952
(43) Date de publication de la demande: 07.05.2014
(73) Titulaire: Arkema France, 92700 Colombes (FR)
(72) Inventeur: RACHED, Wissam, F-69630 Chaponost (FR)
(74) Mandataire: Chahine, Audrey Claire
(86) Numéro de dépôt international: PCT/FR2012/051078
(87) Numéro de publication internationale: WO 2013/004930

(56) Documents cités:
- WO-A1-2010/100254
- WO-A1-2010/141527

## Description

### DOMAINE DE L'INVENTION

La présente invention concerne des compositions de 2,4,4,4-tétrafluorobut-1-ène et de cis-1,1,1,4,4,4-hexafluorobut-2-ène, et leur utilisation, notamment en tant que fluides de transfert de chaleur.

### ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Il est également toujours nécessaire de mettre au point d'autres fluides de transfert de chaleur présentant un potentiel de réchauffement global (GWP) inférieur à celui des fluides de transfert de chaleur actuellement utilisés, et présentant des performances équivalentes ou améliorées.

Le document US 5,076,064 décrit le remplacement du trichlorofluorométhane (CFC-11) par d'autres réfrigérants dans des compresseurs centrifuges. L'utilisation du 2,2-dichloro-1,1,1-trifluoroéthane (HCFC-123) est notamment proposée dans ce document. Toutefois, il reste souhaitable d'utiliser des réfrigérants encore moins nocifs pour la couche d'ozone et présentant un GWP plus faible que le HCFC-123.

Le document WO 2010/141669 décrit l'utilisation de cis-1,1,1,4,4,4-hexafluorobut-2-ène (ou Z-HFO-1336mzz) en tant que réfrigérant, notamment en remplacement du CFC-11 et du HCFC-123. Toutefois, les performances de ce composé sont insuffisantes. En particulier, sa capacité volumétrique est nettement inférieure à celle du HCFC-123.

Le document WO 2010/141527 décrit des compositions azéotropiques ou quasi-azéotropiques comprenant du Z-HFO-1336mzz et un autre composé pouvant être l'éthanol, le 2-chloro-3,3,3-trifluoropropène, le méthanol, le trans-1,1,1,4,4,5,5,5-octafluoropent-2-ène, le 2-bromo-3,3,3-trifluoropropène, le méthyl-acétate, l'acétone, le chloroforme, le n-hexane ou le 1-chloro-3,3,3-trifluoropropène. Ces mélanges sont très inflammables et / ou ne sont pas adaptés au remplacement de réfrigérants tels que le HCFC-123.

Le document WO 2010/100254 décrit de manière générale l'utilisation de mélanges de fluorooléfines de type HFO-1354 et HFO-1336. Le HFO-1354 peut être le 2,4,4,4-tétrafluorobut-1-ène et le HFO-1336 peut être le HFO-1336mzz. Toutefois, la forme isomérique de ce dernier composé n'est pas précisée.

Il existe toujours un besoin de mettre au point d'autres fluides de transfert de chaleur moins nocifs pour la couche d'ozone et présentant un GWP relativement faible, afin de remplacer les fluides de transfert de chaleur usuels.

En particulier, il est souhaitable de mettre au point des fluides de transfert de chaleur à bas GWP pouvant remplacer le HCFC-123 tout en offrant des performances énergétiques similaires voire améliorées, le remplacement pouvant de préférence s'effectuer sans modification des installations existantes ni de leurs paramètres de fonctionnement.

### RESUME DE L'INVENTION

L'invention concerne en premier lieu une composition comprenant du 2,4,4,4-tétrafluorobut-1-ène et du cis-1,1,1,4,4,4-hexafluorobut-2-ène.

Selon un mode de réalisation, la composition consiste en un mélange de 2,4,4,4-tétrafluorobut-1-ène et de cis-1,1,1,4,4,4-hexafluorobut-2-ène.

Selon un mode de réalisation, la composition comprend :
- de 1 à 99 % de 2,4,4,4-tétrafluorobut-1-ène et de 1 à 99 % cis-1,1,1,4,4,4-hexafluorobut-2-ène ;
- de préférence de 5 à 70 % de 2,4,4,4-tétrafluorobut-1-ène et de 30 à 95 % de cis-1,1,1,4,4,4-hexafluorobut-2-ène ;
- de préférence de 20 à 65 % de 2,4,4,4-tétrafluorobut-1-ène et de 35 à 80 % de cis-1,1,1,4,4,4-hexafluorobut-2-ène ;
- de préférence de 25 à 60 % de 2,4,4,4-tétrafluorobut-1-ène et de 40 à 75 % de cis-1,1,1,4,4,4-hexafluorobut-2-ène ;
- de préférence de 28 à 51 % de 2,4,4,4-tétrafluorobut-1-ène et de 49 à 72 % de cis-1,1,1,4,4,4-hexafluorobut-2-ène.

Selon un mode de réalisation, la composition est quasi-azéotropique, et de préférence est azéotropique.

L'invention concerne également l'utilisation de la composition susmentionnée, en tant que fluide de transfert de chaleur.

Selon un mode de réalisation, la composition est quasi-azéotropique, de préférence est azéotropique.

Selon un mode de réalisation, la composition est non-inflammable.

L'invention concerne également une composition de transfert de chaleur, comprenant la composition susmentionnée, ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

L'invention concerne également une installation de transfert de chaleur comprenant un circuit de compression de vapeur contenant la composition susmentionnée en tant que fluide de transfert de chaleur ou contenant la composition de transfert de chaleur susmentionnée.

Selon un mode de réalisation, l'installation comprend un compresseur centrifuge, et de préférence un compresseur centrifuge à entraînement direct.

Selon un mode de réalisation, l'installation comprend un évaporateur noyé.

Selon un mode de réalisation, l'installation est choisie parmi les installations mobiles ou stationnaires de chauffage par pompe à chaleur, de climatisation, et notamment de climatisation automobile, climatisation stationnaire centralisée, de réfrigération, de congélation et les cycles de Rankine, et de préférence est une installation de climatisation.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition telle que décrite ci-dessus.

L'invention concerne également un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition telle que décrite ci-dessus.

Selon un mode de réalisation, le fluide de transfert de chaleur initial est le 2,2-dichloro-1,1,1-trifluoroéthane.

L'invention concerne également l'utilisation de la composition susmentionnée, en tant que solvant.

L'invention concerne également l'utilisation de la composition susmentionnée, en tant qu'agent d'expansion.

L'invention concerne également l'utilisation de la composition susmentionnée, en tant qu'agent de propulsion, de préférence pour un aérosol.

L'invention concerne également l'utilisation de la composition susmentionnée, en tant qu'agent de nettoyage.

La présente invention permet de répondre aux besoins ressentis dans l'état de la technique. Elle fournit plus particulièrement de nouvelles compositions à bas GWP et non nocives pour la couche d'ozone, susceptibles d'être utilisées (entre autres) en tant que fluides de transfert de chaleur, notamment en remplacement de fluides de transfert de chaleur usuels et tout particulièrement du HCFC-123.

En particulier, l'invention fournit dans certains modes de réalisation des compositions azéotropiques ou quasi-azéotropiques.

Dans certains modes de réalisation, l'invention fournit des fluides de transfert de chaleur qui présentent de bonnes performances énergétiques par rapport à des fluides de transfert de chaleur usuels et notamment par rapport au HCFC-123, en particulier une capacité volumétrique similaire voire améliorée et / ou un coefficient de performance similaire voire amélioré. Selon certains modes de réalisation, la substitution du HCFC-123 peut s'opérer sans modification de l'installation de transfert de chaleur ni de ses paramètres de fonctionnement.

### BREVE DESCRIPTION DES FIGURES

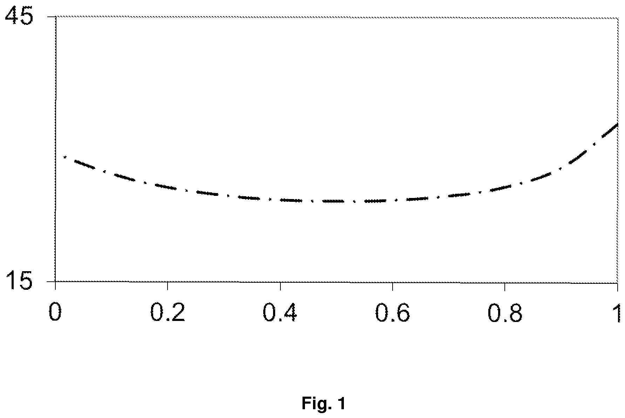

La **figure 1** représente la température normale d'ébullition en °C du mélange Z-HFO-1336mzz / 2,4,4,4-tétrafluorobut-1-ène (en ordonnée) en fonction de la fraction massique de Z-HFO-1336mzz dans le mélange (en abscisse).

### DESCRIPTION DE MODES DE REALISATION DE L'INVENTION

L'invention est maintenant décrite plus en détail et de façon non limitative dans la description qui suit.

Sauf mention contraire, dans l'ensemble de la demande les proportions de composés indiquées sont données en pourcentages massiques.

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par « composé de transfert de chaleur », respectivement « fluide de transfert de chaleur » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « composition de transfert de chaleur » on entend une composition comprenant un fluide de transfert de chaleur et éventuellement un ou plusieurs additifs qui ne sont pas des composés de transfert de chaleur pour l'application envisagée.

Les additifs peuvent notamment être choisis parmi les lubrifiants, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butylglycidyl éther, hexanedioldiglycidyl éther, allylglycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, via un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « pompe à chaleur ».

Il est possible d'utiliser tout type d'échangeur de chaleur pour la mise en oeuvre des fluides de transfert de chaleur selon l'invention, et notamment des échangeurs de chaleur à co-courant ou, de préférence, des échangeurs de chaleur à contre-courant.

Les fluides de transfert de chaleur utilisés dans le cadre de la présente invention sont des compositions comprenant du Z-HFO-1336mzz et du 2,4,4,4-tétrafluorobut-1-ène.

Selon un mode de réalisation, ces fluides de transfert de chaleur peuvent comprendre un ou plusieurs composés de transfert de chaleur supplémentaires.

Ces composés de transfert de chaleur supplémentaires peuvent être notamment choisis parmi les hydrocarbures, les hydrofluorocarbures, les éthers, les hydrofluoroéthers et les fluorooléfines.

Selon des modes de réalisation particuliers, les fluides de transfert de chaleur selon l'invention peuvent être des compositions ternaires (consistant en trois composés de transfert de chaleur) ou quaternaires (consistant en quatre composés de transfert de chaleur), en association avec l'huile de lubrification pour former les compositions de transfert de chaleur selon l'invention.

Lorsque des composés de transfert de chaleur supplémentaires sont présents, il est préféré que leur proportion totale dans les fluides de transfert de chaleur ci-dessus soit inférieure ou égale à 20 %, ou à 15 %, ou à 10 %, ou à 5 %, ou à 2 %.

Selon un mode de réalisation, les fluides de transfert de chaleur consistent essentiellement en un mélange de Z-HFO-1336mzz et de 2,4,4,4-tétrafluorobut-1-ène, voire consistent en un tel mélange (compositions binaires).

Des impuretés peuvent être présentes dans de tels fluides de transfert de chaleur, à raison de moins de 1 %, de préférence moins de 0,5 %, de préférence moins de 0,1 %, de préférence moins de 0,05 % et de préférence moins de 0,01 %.

Selon des modes de réalisation particuliers, la proportion de Z-HFO-1336mzz dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Selon des modes de réalisation particuliers, la proportion de 2,4,4,4-tétrafluorobut-1-ène dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Parmi les fluides de transfert de chaleur ci-dessus, certains présentent l'avantage d'être azéotropiques ou quasi-azéotropiques.

On désigne par « quasi-azéotropiques » les compositions pour lesquelles, à température constante, la pression de saturation liquide et la pression de saturation vapeur sont quasiment identiques (la différence maximale de pression étant de 10 %, voire avantageusement de 5 %, par rapport à la pression de saturation liquide).

Pour des compositions « azéotropiques », à température constante, la différence maximale de pression est voisine de 0 %.

De tels fluides de transfert de chaleur présentent un avantage de facilité de mise en oeuvre. En l'absence de glissement de température significatif, il n'y a pas de changement significatif de la composition circulante, et pas non plus de changement significatif de la composition en cas de fuite.

La **figure 1** représente la température normale d'ébullition du fluide de transfert de chaleur en fonction de la proportion massique de Z-HFO-1336mzz dans le mélange. Le calcul de la température normale d'ébullition en fonction de la composition est basé sur des données mesurées en laboratoire (température, pression, point critique, équilibre liquide-vapeur...) ou estimées suivant les méthodes d'estimation par contribution de groupe ou par état correspondant. Ces méthodes sont d'écrites dans l'ouvrage « The properties of gases and liquids », 5ème édition, Bruce E. Poling et aussi disponible dans des logiciels tels que ASPEN ou ThermoDataEngine (NIST).

Avantageusement, les compositions selon l'invention sont non-inflammables, au sens de la norme ASHRAE 34-2007, et de préférence avec une température de test de 60 °C au lieu de 100 °C.

En outre, certaines compositions selon l'invention présentent des performances améliorées par rapport à certains fluides de transfert de chaleur connus, en particulier pour les procédés de refroidissement à température modérée, c'est-à-dire ceux dans lesquels la température du fluide ou du corps refroidi est de -15 °C à 15 °C, de préférence de -10 °C à 10 °C, de manière plus particulièrement préférée de -5 °C à 5 °C (idéalement d'environ 0 °C).

Par ailleurs, certaines compositions selon l'invention présentent des performances améliorées par rapport à certains fluides de transfert de chaleur connus, en particulier pour les procédés de chauffage à température modérée, c'est-à-dire ceux dans lesquels la température du fluide ou du corps chauffé est de 30 °C à 80 °C, et de préférence de 35 °C à 55 °C, de manière plus particulièrement préférée de 40 °C à 50 °C (idéalement d'environ 45 °C).

Dans les procédés de « refroidissement ou de chauffage à température modérée » mentionnés ci-dessus, la température d'entrée du fluide de transfert de chaleur à l'évaporateur est de préférence de -20 °C à 10 °C, notamment de -15 °C à 5 °C, de manière plus particulièrement préférée de -10 °C à 0 °C et par exemple d'environ -5 °C ; et la température du début de la condensation du fluide de transfert de chaleur au condenseur est de préférence de 25 °C à 90 °C, notamment de 30 °C à 70 °C, de manière plus particulièrement préférée de 35 °C à 55 °C et par exemple d'environ 50 °C. Ces procédés peuvent être des procédés de réfrigération, de climatisation ou de chauffage.

Certaines compositions sont également appropriées pour les procédés de chauffage à haute température, c'est-à-dire ceux dans lesquels la température du fluide ou du corps chauffé est supérieure à 90 °C, par exemple supérieure ou égale à 110 °C ou supérieure ou égale à 130 °C, et de préférence inférieure ou égale à 160 °C.

Certaines compositions selon l'invention présentent des performances améliorées par rapport à certains fluides de transfert de chaleur connus, en particulier pour les procédés de réfrigération à basse température, c'est-à-dire ceux dans lesquels la température du fluide ou du corps refroidi est de -40 °C à - 10 °C, et de préférence de -35 °C à -25 °C, de manière plus particulièrement préférée de -30 °C à -20 °C (idéalement d'environ -25 °C).

Dans les procédés de « réfrigération à basse température » mentionnés ci-dessus, la température d'entrée du fluide de transfert de chaleur à l'évaporateur est de préférence de -45 °C à -15 °C, notamment de -40 °C à -20 °C, de manière plus particulièrement préférée de -35 °C à -25 °C et par exemple d'environ -30 °C ; et la température du début de la condensation du fluide de transfert de chaleur au condenseur est de préférence de 25 °C à 80 °C, notamment de 30 °C à 60 °C, de manière plus particulièrement préférée de 35 °C à 55 °C et par exemple d'environ 40 °C.

Les compositions selon l'invention peuvent servir à remplacer divers fluides de transfert de chaleur dans diverses applications de transfert de chaleur, et par exemple dans le conditionnement d'air. Par exemple, les compositions selon l'invention peuvent servir à remplacer :
- le 1,1,1,2-tétrafluoroéthane (R134a) ;
- le 1,1-difluoroéthane (R152a) ;
- le 1,1,1,3,3-pentafluoropropane (R245fa) ;
- les mélanges de pentafluoroéthane (R125), de 1,1,1,2-tétrafluoroéthane (R134a) et d'isobutane (R600a), à savoir les R422 ;
- le chlorodifluorométhane (R22) ;
- le mélange de 51,2 % de chloropentafluoroéthane (R115) et de 48,8 % de chlorodifluorométhane (R22), à savoir le R502 ;
- tout hydrocarbure ;
- le mélange de 20 % de difluorométhane (R32), de 40 % de pentafluoroéthane (R125) et de 40 % de 1,1,1,2-tétrafluoroéthane (R134a), à savoir le R407A ;
- le mélange de 23 % de difluorométhane (R32), de 25 % de pentafluoroéthane (R125) et de 52 % de 1,1,1,2-tétrafluoroéthane (R134a), à savoir le R407C ;
- le mélange de 30 % de difluorométhane (R32), de 30 % de pentafluoroéthane (R125) et de 40 % de 1,1,1,2-tétrafluoroéthane (R134a), à savoir le R407F ;
- le R1234yf (2,3,3,3-tétrafluoropropène) ;
- le R1234ze (1,3,3,3-tétrafluoropropène).

En outre, les compositions préférées suivantes sont tout particulièrement appropriées pour le remplacement du HCFC-123 :
- de 5 à 70 % de 2,4,4,4-tétrafluorobut-1-ène et de 30 à 95 % de Z-HFO-1336mzz ;
- de préférence de 20 à 65 % de 2,4,4,4-tétrafluorobut-1-ène et de 35 à 80 % de Z-HFO-1336mzz ;
- de préférence de 25 à 60 % de 2,4,4,4-tétrafluorobut-1-ène et de 40 à 75 % de Z-HFO-1336mzz ;
- de préférence de 28 à 51 % de 2,4,4,4-tétrafluorobut-1-ène et de 49 à 72 % de Z-HFO-1336mzz.

A titre d'exemple, on peut utiliser une composition comprenant environ 28 % de 2,4,4,4-tétrafluorobut-1-ène et environ 72 % de Z-HFO-1336mzz.

En effet, dans ce cas la masse molaire moyenne tout comme la température d'ébullition du fluide de transfert de chaleur sont très proches de la masse molaire et de la température d'ébullition du HCFC-123. Ainsi, la composition comprenant 28 % de 2,4,4,4-tétrafluorobut-1-ène et environ 72 % de Z-HFO-1336mzz présente une masse molaire moyenne de 152.09 g/mol (contre 152.93 g/mol pour le HCFC-123) et une température d'ébullition équivalente à la température du HCFC-123.

Ainsi, les compositions préférées ci-dessus permettent une substitution du HCFC-123 sans modification ou pratiquement sans modification de l'installation de transfert de chaleur ou de ses paramètres de fonctionnement.

Corrélativement, ces compositions préférées sont particulièrement appropriées pour toutes les applications dans lesquelles le HCFC-123 est généralement utilisé. C'est ainsi que ces compositions préférées sont particulièrement appropriées pour une utilisation en tant que fluides de transfert de chaleur dans des installations de transfert de chaleur comportant des compresseurs centrifuges, et notamment des compresseurs centrifuges à entraînement direct. Ces compresseurs sont plus performants et moins onéreux que les compresseurs avec boite de changement de vitesse.

Les compresseurs centrifuges peuvent être entraînés par un moteur électrique, une turbine à vapeur, une turbine à gaz, un moteur thermique ou autre.

De préférence, la vitesse du son obtenue est proche de celle obtenue avec le HCFC-123 et / ou la capacité volumétrique obtenue est proche de celle obtenue avec le HCFC-123 et / ou la pression de fonctionnement au condenseur obtenue est proche de celle obtenue avec le HCFC-123.

Ainsi, les compositions préférées ci-dessus peuvent permettre de conserver une vitesse de rotation du compresseur constante lors de la substitution du HCFC-123.

De même, ces compositions préférées sont particulièrement appropriées pour une utilisation en tant que fluides de transfert de chaleur dans des installations de transfert de chaleur comportant un évaporateur noyé.

Par ailleurs, ces compositions préférées sont particulièrement appropriées pour une utilisation pour la climatisation, par exemple avec une température à l'évaporateur d'environ 7°C et une température au condenseur d'environ 35°C et dans des installations de puissances moyennes allant de 250 kW à 35 MW

Les compositions selon l'invention peuvent également être utiles en tant qu'agent d'expansion, agent de propulsion (par exemple pour un aérosol), agent de nettoyage ou solvant, outre leur utilisation en tant que fluides de transfert de chaleur.

En tant qu'agent de propulsion, les compositions selon l'invention peuvent être utilisées seules ou en combinaison avec des agents de propulsion connus. L'agent de propulsion comprend, de préférence consiste en, une composition selon l'invention. La substance active devant être projetée peut être mélangée avec l'agent de propulsion et des composés inertes, des solvants ou autres additifs, pour former une composition à projeter. De préférence, la composition à projeter est un aérosol.

En tant qu'agent d'expansion, les compositions selon l'invention peuvent être comprises dans une composition d'expansion, qui comprend de préférence un ou plusieurs autres composés susceptibles de réagir et de former une mousse ou structure cellulaire dans des conditions appropriées, comme cela est connu de l'homme du métier.

En particulier, l'invention propose un procédé de préparation d'un produit thermoplastique expansé comprenant d'abord la préparation d'une composition polymérique d'expansion. Typiquement, la composition polymérique d'expansion est préparée en plastifiant une résine polymère et en mélangeant les composés d'une composition d'agent d'expansion à une pression initiale. La plastification de la résine polymère peut être effectuée sous l'effet de la chaleur, en chauffant la résine polymère pour la ramollir suffisamment pour mélanger une composition d'agent d'expansion. Généralement, la température de plastification est proche de la température de transition vitreuse ou de la température de fusion pour les polymères cristallins.

D'autres utilisations des compositions selon l'invention comprennent les utilisations en tant que solvants, agents de nettoyage ou autres. On peut citer par exemple le dégraissage par la vapeur, le nettoyage de précision, le nettoyage de circuits électroniques, le nettoyage à sec, le nettoyage abrasif, les solvants pour le dépôt de lubrifiants et d'agents de libération, et d'autres traitements de solvant ou de surface.

## Revendications

1. Composition comprenant du 2,4,4,4-tétrafluorobut-1-ène et du cis-1,1,1,4,4,4-hexafluarobut-2-ène.

2. Composition selon la revendication 1, consistant en un mélange de 2,4,4,4-tétrafluorobut-1-ène et de cis-1,1,1,4,4,4-hexafluorobut-2-éne.

3. Composition selon la revendication 1 ou 2, comprenant :
- de 1 à 99 % de 2,4,4,4-tétrafluorobut-1-ène et de 1 à 99 % cis-1,1,1,4,4,4-hexafluorabut-2-ène ;
- de préférence de 5 à 70 % de 2,4,4,4-tétrafluorobut-1-ène et de 30 à 95 % de cis-1,1,1,4,4,4-hexafluorobut-2-ène ;
- de préférence de 20 à 65 % de 2,4,4,4-tétrafluorobut-1-ène et de 35 à 80 % de cis-1,1,1,4,4,4-hexafluorobut-2-ène ;
- de préférence de 25 à 60 % de 2,4,4,4-tétrafluorobut-1-ène et de 40 à 75 % de cis-1,1,1,4,4,4-hexafluorobut-2-ène ;
- de préférence de 28 à 51 % de 2,4,4,4-tétrafluorobut-1-éne et de 49 à 72 % de cis-1,1,1,4,4,4-hexafluorobut-2-ène,
par rapport à la masse totale de la composition.

4. Utilisation de la composition selon l'une des revendications 1 à 3, en tant que fluide de transfert de chaleur.

5. Utilisation selon la revendication 4, dans laquelle la composition est quasi-azéotropique, de préférence est azéotropique.

6. Utilisation selon la revendication 4 ou 5, dans laquelle la composition est non-inflammable.

7. Composition de transfert de chaleur, comprenant la composition selon l'une des revendications 1 à 3, ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

8. Installation de transfert de chaleur comprenant un circuit de compression de vapeur contenant une composition selon l'une des revendications 1 à 3 en tant que fluide de transfert de chaleur ou contenant une composition de transfert de chaleur selon la revendication 6.

9. Installation selon la revendication 8, comprenant un compresseur centrifuge, et de préférence un compresseur centrifuge à entraînement direct.

10. Installation selon la revendication 8 ou 9, comprenant un évaporateur noyé.

11. Installation selon l'une des revendications 8 à 10, choisie parmi les installations mobiles ou stationnaires de chauffage par pompe à chaleur, de climatisation, et notamment de climatisation automobile ou de climatisation stationnaire centralisée, de réfrigération, de congélation et les cycles de Rankine, et de préférence est une installation de climatisation.

12. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 à 3.

13. Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'une des revendications 1 à 3.

14. Procédé selon la revendication 13, dans lequel le fluide de transfert de chaleur initial est le 2,2-dichloro-1,1,1-trifluoroéthane.

15. Utilisation de la composition selon l'une des revendications 1 à 3, en tant que solvant.

16. Utilisation de la composition selon l'une des revendications 1 à 3, en tant qu'agent d'expansion.

17. Utilisation de la composition selon l'une des revendications 1 à 3, en tant qu'agent de propulsion, de préférence pour un aérosol.

18. Utilisation de la composition selon l'une des revendications 1 à 3, en tant qu'agent de nettoyage.

19. Composition selon l'une des revendications 1 à 3, qui est quasi-azéotropique, et de préférence est azéotropique.

## Patentansprüche

1. Zusammensetzung, umfassend 2,4,4,4-Tetrafluorbut-1-en and cis-1,1,1,4,4,4-Hexafluorbut-2-en.

2. Zusammensetzung nach Anspruch 1, bestehend aus einer Mischung von 2,4,4,4-Tetrafluorbut-1-en and cis-1,1,1,4,4,4-Hexafluorbut-2-en.

3. Zusammensetzung nach Anspruch 1 oder 2, umfassend:
- 1 bis 99 % 2,4,4,4-Tetrafluorbut-1-en und 1 bis 99 % cis-1,1,1,4,4,4-Hexafluorbut-2-en;
- vorzugsweise 5 bis 70 % 2,4,4,4-Tetrafluorbut-1-en und 30 bis 95 % cis-1,1,1,4,4,4-Hexafluorbut-2-en;
- vorzugsweise 20 bis 65 % 2,4,4,4-Tetrafluorbut-1-en und 35 bis 80 % cis-1,1,1,4,4,4-Hexafluorbut-2-en;
- vorzugsweise 25 bis 60 % 2,4,4,4-Tetrafluorbut-1-en und 40 bis 75 % cis-1,1,1,4,4,4-Hexafluorbut-2-en;
- vorzugsweise 28 bis 51 % 2,4,4,4-Tetrafluorbut-1-en und 49 bis 72 % cis-1,1,1,4,4,4-Hexafluorbut-2-en;
bezogen auf das Gesamtgewicht der Zusammensetzung.

4. Verwendung der Zusammensetzung nach einem der Ansprüche 1 bis 3 als Wärmeübertragungsfluid.

5. Verwendung nach Anspruch 4, wobei die Zusammensetzung quasi-azeotrop und vorzugsweise azeotrop ist.

6. Verwendung nach Anspruch 4 oder 5, wobei die Zusammensetzung nicht entflammbar ist.

7. Wärmeübertragungszusammensetzung, umfassend die Zusammensetzung nach einem der Ansprüche 1 bis 3 sowie ein oder mehrere Additive, die aus Schmiermitteln, Stabilisatoren, Tensiden, Tracern, Fluoreszenzmitteln, Geruchsmitteln, Solubilisatoren und Mischungen davon ausgewählt sind.

8. Wärmeübertragungsanlage, umfassend einen Dampfverdichtungskreislauf, der eine Zusammensetzung nach einem der Ansprüche 1 bis 3 als Wärmeübertragungsfluid enthält oder eine Wärmeübertragungszusammensetzung nach Anspruch 6 enthält.

9. Anlage nach Anspruch 8, umfassend einen Zentrifugalverdichter und vorzugsweise einen Zentrifugalverdichter mit Direktantrieb.

10. Anlage nach Anspruch 8 oder 9, umfassend einen überfluteten Verdampfer.

11. Anlage nach einem der Ansprüche 8 bis 10, die aus mobilen oder stationären Wärmepumpenheizanlagen, Klimaanlagen und insbesondere Auto-Klimaanlagen oder zentralisierten stationären Klimaanlagen, Kühlanlagen, Gefrieranlagen und Rankine-Zyklen ausgewählt ist und vorzugsweise eine Klimaanlage ist.

12. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmefluid kondensiert und das Wärmeübertragungsfluid entspannt, wobei es sich bei dem Wärmeübertragungsfluid um eine Zusammensetzung nach einem der Ansprüche 1 bis 3 handelt.

13. Verfahren zur Verringerung der Umweltbelastung durch eine Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Übertragungsfluid ersetzt, wobei das letztendliche Übertragungsfluid ein kleineres GWP als das anfängliche Wärmeübertragungsfluid aufweist, wobei es sich bei dem letztendlichen Wärmeübertragungsfluid um eine Zusammensetzung nach einem der Ansprüche 1 bis 3 handelt.

14. Verfahren nach Anspruch 13, bei dem es sich bei dem anfänglichen Wärmeübertragungsfluid um 2,2-Dichlor-1,1,1-trifluorethan handelt.

15. Verwendung der Zusammensetzung nach einem der Ansprüche 1 bis 3 als Lösungsmittel.

16. Verwendung der Zusammensetzung nach einem der Ansprüche 1 bis 3 als Blähmittel.

17. Verwendung der Zusammensetzung nach einem der Ansprüche 1 bis 3 als Treibmittel, vorzugsweise für ein Aerosol.

18. Verwendung der Zusammensetzung nach einem der Ansprüche 1 bis 3 als Reinigungsmittel.

19. Zusammensetzung nach einem der Ansprüche 1 bis 3, die quasi-azeotrop und vorzugsweise azeotrop ist.

## Claims

1. Composition comprising 2,4,4,4-tetrafluorobut-1-ene and cis-1,1,1,4,4,4-hexafluorobut-2-ene.

2. Composition according to Claim 1, consisting of a mixture of 2,4,4,4-tetrafluorobut-1-ene and cis-1,1,1,4,4,4-hexafluorobut-2-ene.

3. Composition according to Claim 1 or 2, comprising:
- from 1% to 99% of 2,4,4,4-tetrafluorobut-1-ene and from 1% to 99% of cis-1,1,1,4,4,4-hexafluorobut-2-ene;
- preferably from 5% to 70% of 2,4,4,4-tetrafluorobut-1-ene and from 30% to 95% of cis-1,1,1,4,4,4-hexafluorobut-2-ene;
- preferably from 20% to 65% of 2,4,4,4-tetrafluorobut-1-ene and from 35% to 80% of cis-1,1,1,4,4,4-hexafluorobut-2-ene;
- preferably from 25% to 60% of 2,4,4,4-tetrafluorobut-1-ene and from 40% to 75% of cis-1,1,1,4,4,4-hexafluorobut-2-ene;
- preferably from 28% to 51% of 2,4,4,4-tetrafluorobut-1-ene and from 49% to 72% of cis-1,1,1,4,4,4-hexafluorobut-2-ene,
with respect to the total weight of the composition.

4. Use of the composition according to one of Claims 1 to 3 as heat-transfer fluid.

5. Use according to Claim 4, in which the composition is quasi-azeotropic, preferably azeotropic.

6. Use according to Claim 4 or 5, in which the composition is nonflammable.

7. Heat-transfer composition comprising the composition according to one of Claims 1 to 3 and also one or more additives chosen from lubricants, stabilizing agents, surfactants, tracers, fluorescent agents, odorous agents, solubilizing agents and their mixtures.

8. Heat-transfer installation comprising a vapor compression circuit containing a composition according to one of Claims 1 to 3 as heat-transfer fluid or containing a heat-transfer composition according to Claim 6.

9. Installation according to Claim 8, comprising a centrifugal compressor and preferably a direct-drive centrifugal compressor.

10. Installation according to Claim 8 or 9, comprising a flooded evaporator.

11. Installation according to one of Claims 8 to 10, which is chosen from mobile or stationary installations for heat-pump heating, air conditioning, in particular motor vehicle air conditioning or centralized stationary air conditioning, refrigeration or freezing and Rankine cycles and is preferably an air conditioning installation.

12. Process for heating or cooling a liquid or a body by means of a vapor compression circuit containing a heat-transfer fluid, said process successively comprising the evaporation of the heat-transfer fluid, the compression of the heat-transfer fluid, the condensation of the heat-transfer fluid and the reduction in pressure of the heat-transfer fluid, in which the heat-transfer fluid is a composition according to one of Claims 1 to 3.

13. Process for reducing the environmental impact of a heat-transfer installation comprising a vapor compression circuit containing an initial heat-transfer fluid, said process comprising a stage of replacement of the initial heat-transfer fluid in the vapor compression circuit by a final transfer fluid, the final heat-transfer fluid exhibiting a lower GWP than the initial heat-transfer fluid, in which the final heat-transfer fluid is a composition according to one of Claims 1 to 3.

14. Process according to Claim 13, in which the initial heat-transfer fluid is 2,2-dichloro-1,1,1-trifluoroethane.

15. Use of the composition according to one of Claims 1 to 3 as solvent.

16. Use of the composition according to one of Claims 1 to 3 as blowing agent.

17. Use of the composition according to one of Claims 1 to 3 as propellant, preferably for an aerosol.

18. Use of the composition according to one of Claims 1 to 3 as cleaning agent.

19. Composition according to one of Claims 1 to 3, which is quasi-azeotropic, preferably azeotropic.
